# EUROPÄISCHE PATENTSCHRIFT

(11) **EP 4 230 883 B1**
(45) Veröffentlichungstag und Bekanntmachung des Hinweises auf die Patenterteilung: **23.07.2025**
(21) Anmeldenummer: 23157547.3
(22) Anmeldetag: 20.02.2023
(51) Int. Cl.: F16B 23/00

(54) **ANTRIEBSELEMENT, INSBESONDERE IN DER FORM EINER SCHRAUBE**
DRIVE ELEMENT, IN PARTICULAR IN THE FORM OF A SCREW
ELÉMENT D'ENTRAÎNEMENT, EN PARTICULIER SOUS FORME DE VIS

(30) Priorität: 18.02.2022 DE 102022103942
(43) Veröffentlichungstag der Anmeldung: 23.08.2023
(73) Patentinhaber: Bongartz, Nicole, 41464 Neuss (DE)
(72) Erfinder: Bongartz, Nicole, 41464 Neuss (DE)
(74) Vertreter: Paul & Albrecht Patentanwälte PartG mbB

(56) Entgegenhaltungen:
- EP-A1- 1 245 839
- BR-A- 8 500 034
- DE-A1- 19 653 511

## Beschreibung

Die vorliegende Erfindung betrifft ein Antriebselement, insbesondere in der Form einer Schraube, welches ein inneres Mitnahmeprofil aufweist, das eine Profilachse definiert und an seiner Innenseite mehrere gleichmäßig um die Profilachse verteilt angeordnete Antriebsflächen aufweist, wobei das Mitnahmeprofil an seinem einen oberen Ende eine Einstecköffnung bildet, über welche das innere Mitnahmeprofil mit einem äußeren Mitnahmeprofil eines korrespondierenden Antriebselements zusammengesteckt werden kann.

Weiterhin betrifft die vorliegende Erfindung ein Antriebselement, insbesondere in der Form einer Schraube, welches ein inneres Mitnahmeprofil aufweist, das als Innenvielrund-Profil, insbesondere als Innensechsrund-Profil ausgebildet ist, wobei das innere Mitnahmeprofil eine Profilachse definiert und an seiner Innenseite mehrere gleichmäßig um die Profilachse verteilt angeordnete Antriebsflächen aufweist, welche durch die konkav nach innen gerichteten Bereiche des Innenvielrund-Profils gebildet werden, und zwischen den Antriebsflächen liegende Übergangsbereiche besitzt, welche von der Proflachse weg konvex nach außen gekrümmt sind, wobei das innere Mitnahmeprofil an seinem einen oberen Ende eine Einstecköffnung bildet, über welche das innere Mitnahmeprofil mit einem äußeren Mitnahmeprofil eines korrespondierenden Antriebselements zusammengesteckt werden kann.

Schrauben und Drehwerkzeuge sind aus dem Stand der Technik in unterschiedlichen Ausgestaltungen bekannt. Dabei umfassen die Schrauben einen Schraubenschaft mit einem Außengewinde, an dessen oberen Endbereich ein Schraubenkopf mit einem Mitnahmeprofil zur Kopplung mit einem Drehwerkzeug vorgesehen ist. Die Drehwerkzeuge sind beispielsweise in Form von Ring- oder Maulschlüsseln ausgebildet und umfassen auswechselbare Bits, die über einen Bithalter mit einem Antrieb, beispielsweise in der Form eines Handgriffs oder eines Akkuschraubers, verbunden werden. Alternativ kann der Bithalter über einen Adapter zum wechselnden Einsatz mit einem Schraubendrehergriff oder einem abgewinkelten Griff, mit einer Knarre, einem Drehmomentschlüssel, einem Akkuschrauber oder einem Ratschenschrauber verbunden werden.

Schraube und Drehwerkzeug werden zum übertragen eines Drehmoments von dem Drehmoment auf die Schraube mit komplementär zueinander ausgebildeten Mitnahmeprofilen angeboten. Hierzu weist eines der Bauteile ein äußeres Mitnahmeprofil mit außenliegenden Antriebsflächen und das andere Bauteil einen zu dem äußeren Mitnahmeprofil komplementäres inneres Mitnaheprofil mit innenliegenden Antriebsflächen auf. Die Mitnahmeprofile sind beispielsweise in der Form eines Innensechskants, eines Außensechskants, eines Torx-Profils oder dergleichen ausgebildet. In der vorliegenden Anmeldung geht es in erster Linie um Schrauben, die mit einem inneren Mitnahmeprofil beispielsweise in der Form eines Innensechskants oder eines Torx-Profils versehen sind.

Wenn in ein solches innere Mitnahmeprofil der Schraube ein Drehwerkzeug eingesteckt wird führt dies dazu, dass das innere Mitnahmeprofil der Schraube und das äußere Mitnahmeprofil des Drehwerkzeugs mit Spiel aneinander anliegen. Dies führt dazu, dass sich die Mitnahmeprofile in ungewollter Weise voneinander lösen können und es weiterhin auch nicht möglich ist, die Mitnahmeprofile axial sauber zueinander auszurichten. Um die Handhabung beim Eindrehen und Lösen der Schraube mit dem Drehwerkzeug zu vereinfachen, werden zwei Drehwerkezuge angeboten, die mit einem Magnet versehen sind, oder ferromagnetische Drehwerkzeuge, die mit einem Magnet magnetisierbar sind. Dies ist jedoch mit zusätzlichem Aufwand verbunden.

Zur Behebung dieser Problematik ist es aus der DE 10 2005 011 734 A1 bekannt, bei einem Drehwerkzeug zum Eindrehen und Lösen sogenannter Trox-Schrauben die Antriebsflächen unter einem Spitzenwinkel geneigt zur Profilachse auszubilden, so dass beim axialen Zusammenstecken der Mitnahmeprofile des Drehwerkzeugs und der Schraube ein Klemmsitz entsteht und somit keine zusätzlichen Haltemittel erforderlich sind, um die Schraube in ein Gewinde einzudrehen. Aufgabe der Erfindung ist es, ein Antriebselement dieser eingangs genannten Art, welches ein inneres Mitnahmeprofil aufweist, so auszugestalten, dass eine zuverlässige Verbindung mit einem äußeren Mitnahmeprofil eines korrespondierenden Antriebselements, beispielsweise eines Drehwerkzeugs, hergestellt werden kann. BR 8 500 034 A offenbart ein bekanntes Antriebselement.

Diese Aufgabe ist erfindungsgemäß bei einem Antriebselement der eingangs genannten Art dadurch gelöst, dass an den Antriebsflächen Klemmnasen vorgesehen sind, welche sich ausgehend von dem unteren Ende der Antriebflächen nach oben in Richtung der Einstecköffnung erstrecken, und dass die Klemmnasen von der Profilachse in Richtung der jeweiligen Antriebsfläche betrachtet eine umgekehrt paraboloide Außenkontur mit einem zur Einstecköffnung weisenden Scheitel sowie im Querschnitt senkrecht zur Profilachse eine paraboloide Querschnittskontur mit einem zum Inneren des Mitnahmeprofils weisenden Scheitel aufweisen, wobei die Querschnittsfläche der Klemmnasen vom unteren zum oberen Ende der Klemmnasen kontinuierlich abnimmt.

Der Übergang von den Klemmnasen zu den Antriebsflächen am oberen Ende der Klemmnasen erfolgt dabei zweckmäßiger Weise ohne Sprung und kann stetig, d.h. abgerundet sein.

In bevorzugter Weise sind die Klemmnasen jeweils symmetrisch zu einer die Profilachse schneidenden Längsmittelebene der jeweiligen Antriebsfläche ausgebildet.

Gemäß einer Ausgestaltung der Erfindung ist vorgesehen, dass in der Längsmittelebene der jeweiligen Antriebsfläche betrachtet die zur Profilachse weisenden Seiten der Klemmnasen zumindest über einen Teilabschnitt ihrer axialen Länge, bevorzugt über ihre gesamte axiale Länge geradlinig ausgebildet sind und mit der Profilachse einen Neigungswinkel α von wenigstens 1°, insbesondere wenigstens 1,5°, bevorzugt wenigstens 2,5° und speziell bevorzugt wenigstens 4,5° und/oder maximal 10°, insbesondere maximal 9°, bevorzugt maximal 8° und speziell bevorzugt maximal 7° einschließen. Bevorzugt liegt der Neigungswinkel in einem Bereich von 2 bis 5°, insbesondere 3 bis 4°.

Der Erfindung liegt die Überlegung zugrunde, an den Antriebsflächen Klemmnasen vorzusehen, die von den Antriebflächen in Richtung der Profilachse ragen und zum unteren Ende der Antriebsflächen dicker werden, so dass ihr Abstand von der Profilachse kleiner wird. Die Klemmnasen sind so ausgestaltet, dass die führende Kante eines zu dem inneren Mitnahmeprofil korrespondierenden äußeren Mitnahmeprofils mit den Klemmnasen in Kontakt kommt, wenn das äußere Mitnahmeprofil axial in das innere Mitnahmeprofil gesteckt wird, mit der Folge, dass das äußere Mitnahmeprofil in dem inneren Mitnahmeprofil klemmend fixiert und ggf. auch axial ausgerichtet wird. Hierdurch wird die Handhabung deutlich vereinfacht.

Bei einer Ausfühungsform der Erfindung ist vorgesehen, dass die Klemmnasen sich ausgehend von dem unteren Ende der Antriebsflächen über wenigstens 10%, insbesondere wenigstens 20%, bevorzugt wenigstens 30% und besonders bevorzugt über wenigstens 40% und/oder über maximal 100%, insbesondere maximal 80%, bevorzugt maximal 70%, bevorzugt maximal 60% und besonders bevorzugt maximal 50% der axialen Höhe der Antriebsflächen erstrecken. Insbesondere können sich die Klemmnasen über 30 bis 40% der Höhe der Antriebsflächen erstrecken. Es hat sich gezeigt, dass es ausreichend sein kann, wenn die Klemmnasen nur in dem unteren Endbereich der Antriebsflächen ausgebildet sind, wenn die Mitnahmeprofile eine gewisse axiale Länge/Höhe besitzen. Wenn die Mitnahmeprofile flach sind, d.h. eine geringe Höhe besitzen, werden sich die Klemmnasen jedoch schon aus fertigungstechnischen Gründen bis in den oberen Endbereich der Antriebsflächen erstrecken.

Zweckmäßiger Weise können an sämtlichen Antriebsflächen Klemmnasen ausgebildet sein. Ebenso ist es zweckmäßig, wenn sämtliche Klemmnasen identisch ausgebildet sind.

Bei herkömmlichen Schrauben und Schraubenbits sind die Mitnahmeprofile regelmäßig ausgebildet. In diesem Fall erstrecken sich die Antriebsflächen jeweils über einen vorgegebenen Umfangswinkel β um die Profilachse des Mitnahmeprofils. Bei Sechskantprofilen oder Torx-Profilen beträgt dieser Umfangswinkel 60°. Gemäß einer Ausführungsform der Erfindung erstrecken sich die Klemmnasen an ihrem unteren Ende über den gesamten Umfangswinkel β. In bevorzugter Weise ist jedoch vorgesehen, dass sich die Klemmnasen über einen Umfangswinkel γ erstrecken, der wenigstens 10%, insbesondere wenigstens 20%, bevorzugt wenigstens 30% und/oder maximal 70%, insbesondere maximal 60% und bevorzugt maximal 50% des Umfangswinkels β beträgt. Mit anderen Worten erstrecken sich die Klemmnasen nur über einen Teil des Umfangswinkels β.

Wie schon erwähnt kann das innere Mitnahmeprofil als Innensechskant-Profil mit sechs gleichmäßig um die Profilachse verteilt angeordneten ebenen Antriebsflächen ausgebildet sein.

Alternativ ist es möglich, dass das innere Mitnahmeprofil als Innenvielrund-Profil, insbesondere als Innensechsrund-Profil ausgebildet ist, wobei die Antriebsflächen durch die konkav nach innen in Richtung der Profilachse verlaufenden Bereiche des Innenvielrund-Profils gebildet sind. Das Innenvielrund-Profil besitzt ferner zwischen den Antriebsflächen liegende Übergangsflächen, welche von der Profilachse weg konvex nach außen gekrümmt sind.

Im Fall von Innenvielrund-Profilen können die Klemmnasen nach einem weiteren Aspekt auch an den Übergangsflächen oder in den Bereichen, in welchen die Antriebsflächen in die Übergangsflächen übergehen, vorgesehen sein.

Konkret ist gemäß dem weiteren Aspekt der Erfindung vorgesehen dass, an den Übergangsflächen Klemmnasen vorgesehen sind, welche sich ausgehend von dem unteren Ende der Übergangsflächen nach oben in Richtung der Einstecköffnung erstrecken, und dass die Klemmnasen von der Profilachse in Richtung der jeweiligen Übergangsfläche betrachtet eine umgekehrt paraboloide Außenkontur mit einem zur Einstecköffnung weisenden Scheitel aufweisen im Querschnitt senkrecht zur Profilachse der Übergangsfläche eine paraboloide Querschnittskontur mit einem zum Inneren des inneren Mitnahmeprofils weisenden Scheitel aufweisen, wobei die Querschnittsfläche der Klemmnasen vom unteren zum oberen Ende der Klemmnasen kontinuierlich abnimmt.

Dabei können die Klemmnasen jeweils symmetrisch zu einer die Profilachse schneidenden Längsmittelebene der jeweiligen Übergangsfläche ausgebildet sein.

Gemäß einer Ausgestaltung der Erfindung ist vorgesehen, dass in der Längsmittelebene der jeweiligen Übergangsfläche betrachtet die zur Profilachse weisenden Seiten zumindest über einen Teilabschnitt ihrer axialen Länge, bevorzugt über ihre gesamte axiale Länge geradlinig verlaufen und mit der Profilachse einen Neigungswinkel α von wenigstens 1°, insbesondere wenigstens 1,5°, bevorzugt wenigstens 2,5° und speziell bevorzugt wenigstens 4,5° und/oder maximal 10°, insbesondere maximal 9°, bevorzugt maximal 8° und speziell bevorzugt maximal 7° einschließen.

Bevorzugt liegt der Neigungswinkel in einem Bereich von 2° bis 5°, insbesondere 3° bis 4°.

Gemäß einer Ausführungsform ist vorgesehen, dass die Klemmnasen sich ausgehend von dem unteren Ende der Übergangsflächen über wenigstens 10%, insbesondere wenigstens 20%, bevorzugt wenigstens 30% und besonders bevorzugt über wenigstens 40% und/oder über maximal 100%, insbesondere maximal 80%, bevorzugt maximal 70%, bevorzugt maximal 60% und besonders bevorzugt maximal 50% der axialen Höhe der Übergangsflächen erstrecken.

Zweckmäßigerweise können an sämtlichen Antriebsflächen Klemmnasen ausgebildet sein. Ebenso ist es zweckmäßig, wenn sämtliche Klemmnasen identisch ausgebildet sind.

Die Übergangsflächen erstrecken sich regelmäßig über einen vorgegebenen Umfangswinkel um die Profilachse. In bevorzugter Weise ist vorgesehen, dass sich die Klemmnasen über einen Umfangswinkel erstrecken, der wenigstens 10%, insbesondere wenigstens 20%, bevorzugt wenigstens 30% und/oder maximal 70%, insbesondere maximal 60% und bevorzugt maximal 50% dieses Umfangswinkels beträgt.

Die vorstehenden Ausführungen hinsichtlich des Neigungswinkels der sonstigen Ausgestaltung der Klemmnasen gelten auch, wenn die Klemmnasen nicht symmetrisch zu einer die Profilachse schneidenden Längsmittelebene jeweiligen Antriebsfläche oder Übergangsfläche ausgebildet sind.

Weitere Merkmale und Vorteile der Erfindung werden anhand der beiliegenden Zeichnung beschrieben. In der Zeichnung zeigt:
- Figur 1: eine perspektivische Ansicht des Schraubenkopfes eines als Schraube ausgebildeten Antriebselements gemäß der vorliegenden Erfindung mit einem als Innensechsrund-Profil ausgebildeten inneren Mitnahmeprofil,
- Figur 2: eine Draufsicht auf den Schraubenkopf der Schraube aus Figur 1,
- Figur 3: den Schraubenkopf im Schnitt entlang der Längsmittelebene A-A aus Figur 2 durch zwei einander gegenüberliegende Antriebsflächen des Schraubenkopfes,
- Figur 4: eine perspektivische Ansicht der Schraube, die mit einem korrespondierenden, als Schraubenbit ausgebildeten Antriebselement mit äußerem Mitnahmeprofil ein Eingriff steht,
- Figur 5: die Anordnung aus Figur 4 in Draufsicht,
- Figur 6: die Anordnung im Schnitt entlang einer Längsmittelebene A-A durch zwei einander gegenüberliegende Antriebsflächen des Schraubenkopfes,
- Figur 7: eine perspektivische Ansicht des Schraubenkopfes eines weiteren als Schraube ausgebildeten Antriebselements gemäß der Erfindung, dessen inneres Mitnahmeprofil als Innensechskant-Profil ausgebildet ist,
- Figur 8: den Schraubenkopf aus Figur 7 in Draufsicht,
- Figur 9: den Schraubenkopf im Schnitt entlang der Längsmittelebene A-A aus Figur 8 durch zwei einander gegenüberliegende Antriebsflächen des Schraubenkopfes,
- Figur 10: eine perspektivische Ansicht der Schraube, die mit einem korrespondierenden, als Schraubenbit ausgebildeten Antriebselement mit äußerem Mitnahmeprofil ein Eingriff steht,
- Figur 11: die Anordnung aus Figur 10 in Draufsicht,
- Figur 12: die Anordnung im Schnitt entlang der Längsmittelebene A-A aus Figur 11 durch zwei einander gegenüberliegende Antriebsflächen des Schraubenkopfes,
- Figur 13: eine perspektivische Ansicht eines Schraubenkopfes eines weiteren als Schraube ausgebildeten Antriebselements gemäß der vorliegenden Erfindung, dessen inneres Mitnahmeprofil als Innensechsrund-Profil ausgebildet ist,
- Figur 14: den Schraubenkopf aus Figur 13 in Draufsicht,
- Figur 15: den Schraubenkopf im Schnitt entlang der Längsmittelebene A-A aus Figur 14 durch zwei einander gegenüberliegende Übergangsflächen des Schraubenkopfes,
- Figur 16: eine perspektivische Ansicht eines Schraubenkopfes eines weiteren als Schraube ausgebildeten Antriebselements gemäß der vorliegenden Erfindung, dessen inneres Mitnahmeprofil als Innensechsrund-Profil ausgebildet ist,
- Figur 17: den Schraubenkopf aus Figur 16 in Draufsicht, und
- Figur 18: den Schraubenkopf im Schnitt entlang der Längsmittelebene A-A aus Figur 17 durch zwei einander gegenüberliegenden Übergangsflächen des Schraubenkopfes.

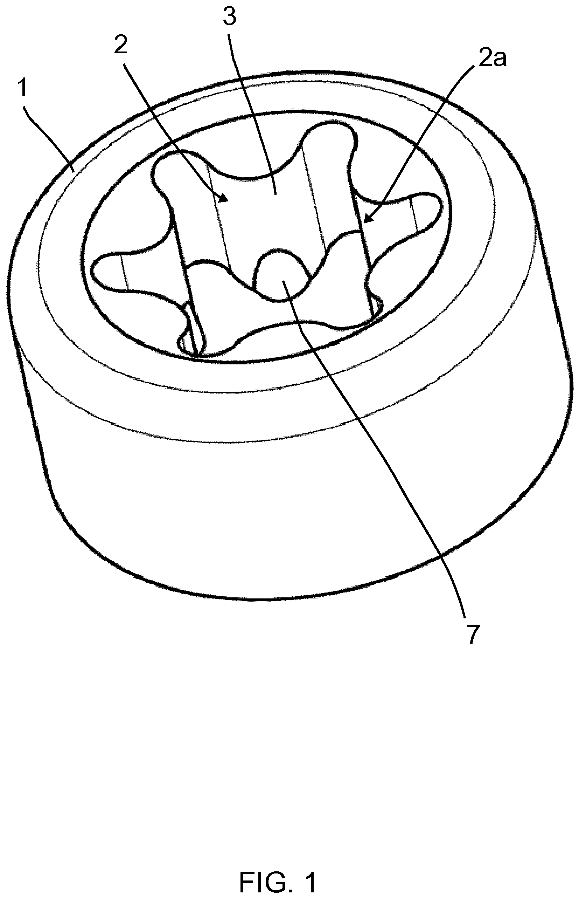

In der Figur 1 ist beispielhaft ein Antriebselement gemäß der vorliegenden Erfindung in Form einer Schraube, von welcher nur der Schraubenkopf 1 gezeigt ist, dargestellt. Die Schraube umfasst einen nicht dargestellten Schaft, der ein Außengewinde trägt und eine Längsachse der Schraube definiert. An dem oberen Ende des Schafts ist der Schraubenkopf 1 vorgesehen. Dieser weist an seiner Innenseite ein zur Oberseite des Schraubenkopf 1 hin offenes, inneres Mitnahmeprofil 2 mit innenliegenden Antriebsflächen 3 aufweist, dass eine koaxial zu der Längsachse der Schraube liegende Profilachse PI definiert. Dabei bildet die offene Oberseite des Schraubenkopfs 1 eine Einstecköffnung 2a des inneren Mitnahmeprofils 2 für ein als Schraubenbit 4 ausgebildetes Antriebselement.

Das innere Mitnahmeprofil 2 der Schraube ist als Innensechsrund-Profil oder Innen-Sechs-Bogenzahn-Profil, auch unter der Vertriebsbezeichnung Torx-Profil bekannt, ausgebildet. Es besitzt sechs Antriebsflächen 3, die sich jeweils über einen Umfangswinkel β bezüglich der Profilachse PI von 60° erstrecken und die Form eines in Richtung der Profilachse Pl konkav nach innen gekrümmten Bereichs, das heißt eines nach innen ragenden Bogenzahns besitzen. Die Antriebsflächen 3 verlaufen parallel zu der Profilachse PI bzw. der Längsachse der Schraube 1. Die Antriebsflächen 3 sind durch Übergangsflächen 8 miteinander verbunden, die hier von der Profilachse PI weg, das heißt konvex nach außen gekrümmt sind.

Das als Schraubenbit 4 ausgebildete Antriebselement besitzt ein äußeres Mitnahmeprofil 5, das korrespondierend zu dem inneren Mitnahmeprofil 2 der Schraube ausgebildet ist. Entsprechend besitzt das als Außensechsrund-Profil ausgebildete äußere Mitnahmeprofil 5 sechs Antriebsflächen 6, die sich über einen Umfangswinkel β von jeweils 60° in Bezug auf die Profilachse PA des äußeren Mitnahmeprofils 5 erstrecken und parallel zu der Profilachse PA verlaufen.

Erfindungsgemäß sind an den Antriebsflächen 3 des inneren Mitnahmeprofils 2 der Schraube Klemmnasen 7 ausgebildet, die symmetrisch zu einer die Profilachse Pl enthaltenden Längsmittelebene A-A durch die jeweilige Antriebsfläche 3 ausgebildet sind und sich ausgehend von dem unteren Ende der Antriebsflächen 3 nach oben in Richtung der Einstecköffnung 2a erstrecken. Von der Profilachse PI in Richtung der Antriebsflächen 3 betrachtet - also in Vorderansicht auf die Antriebsflächen 3 - besitzen die Klemmenasen 7 eine umgekehrt paraboloide Außenkontur mit einem zur Einstecköffnung 2a weisenden Scheitel. Ebenso besitzen sie im Querschnitt senkrecht zur Profilachse Pl eine paraboloide Querschnittskontur mit einem zur Innenseite, hier zur Profilachse PI des Mitnahmeprofils 2 weisenden Scheitel.

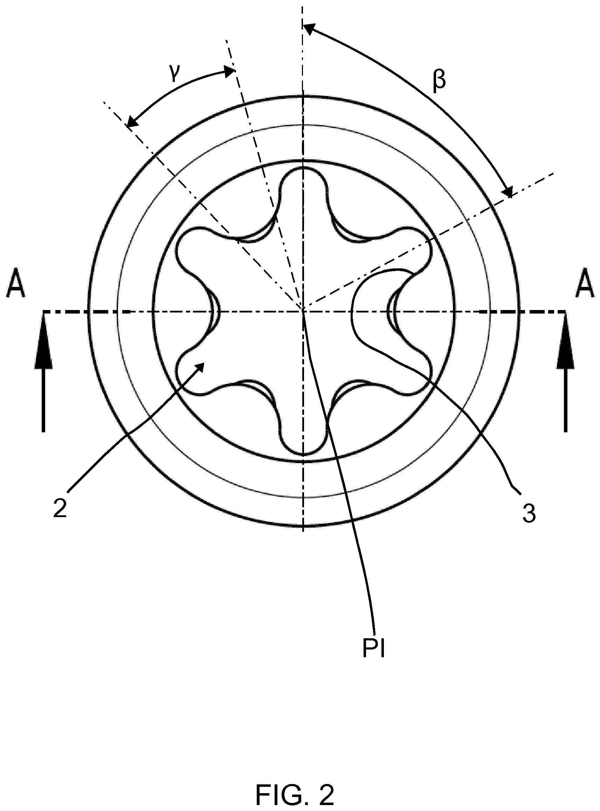

Wie insbesondere die Figur 2 erkennen lässt, nimmt die Querschnittsfläche der Klemmnasen 7 vom unteren zum oberen Ende der Klemmnasen 7 kontinuierlich ab. Die Anordnung ist dabei so getroffen, dass die zur Profilachse Pl weisenden Seiten der Klemmnasen 7 in der Längsmittelebene A-A der jeweiligen Antriebsfläche 3 betrachtet mit der Profilachse PI einen Neigungswinkel α von bevorzugt 3 bis 4° einschließen, in der Längsmittelebene betrachtet läuft also die nach innen weisende Kontur der Klemmnasen 7 konusförmig in Richtung der Profilachse PI zu. Dabei gehen die Klemmnasen 7 an ihrem oberen Ende ohne einen Sprung in die Antriebsflächen 3 über.

In dem dargestellten Ausführungsbeispiel erstrecken sich die Klemmnasen 7 etwa über 30% der Höhe der Antriebsflächen 3. In Umfangsrichtung betrachtet erstrecken sich die Klemmnasen 7 an ihrem unteren Ende über einen Umfangswinkel γ bezogen auf die Profilachse PI von etwas über 20°, d.h. etwa über 30% des Umfangswinkels βder Antriebsflächen 6.

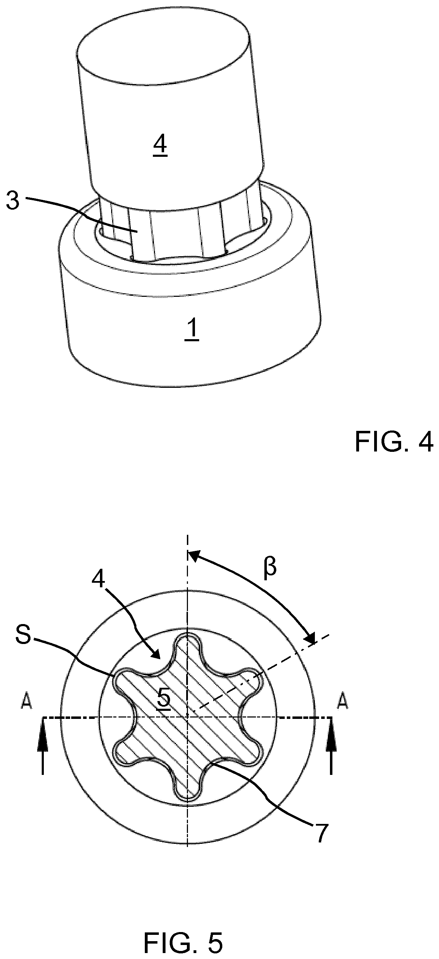

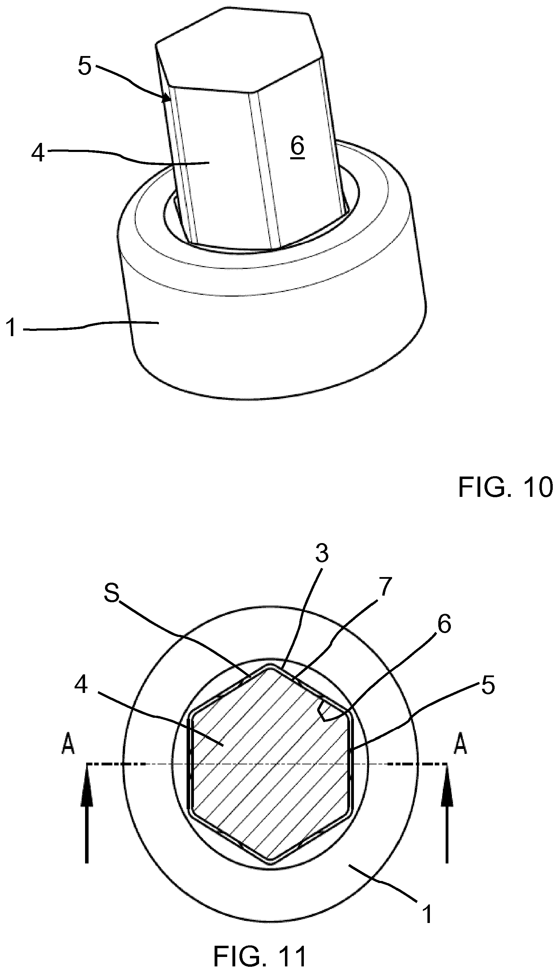

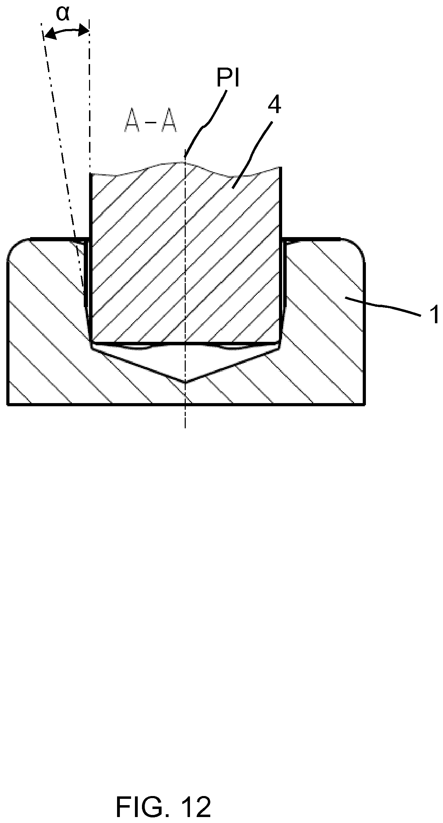

Zwischen dem inneren Mitnahmeprofil 2 der Schraube 1 und dem äußeren Mitnahmeprofil 5 des Schraubenbits 4 besteht immer ein gewisses Spiel S, wenn der Schraubenbit 4 in das innere Mitnahmeprofil 2 der Schraube gesteckt wird. Beim Einsteckvorgang kommt die führende Kante des Schraubenbits 4 jedoch in Kontakt mit den Klemmnasen 7 und wird durch diese in dem Schraubenkopf 1 festgeklemmt, wie dies in den Figuren 5 und 6 bzw. 11 und 12 gut erkennbar ist. Hierdurch wird ein sicherer Halt des Schraubenbits 4 in dem Schraubenkopf 1 sichergestellt.

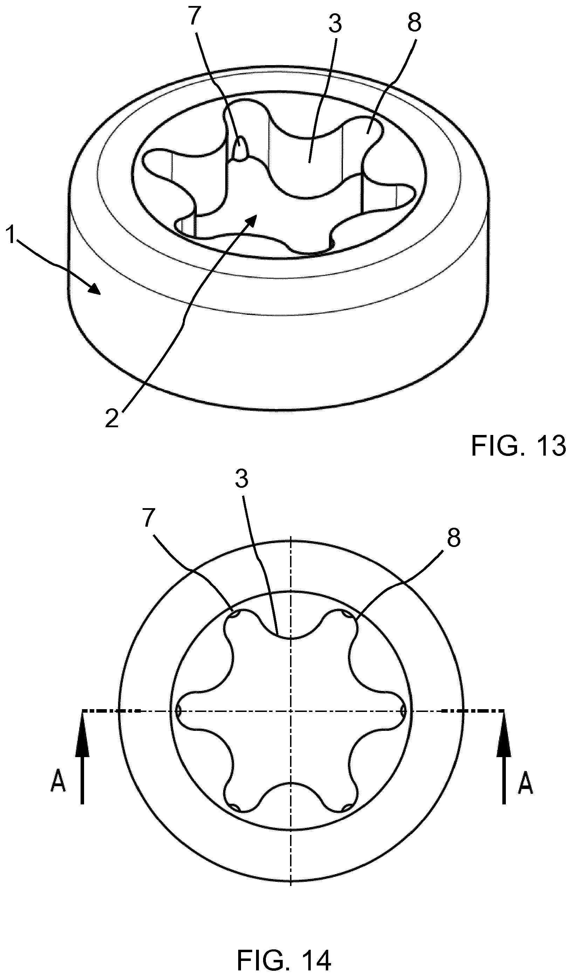

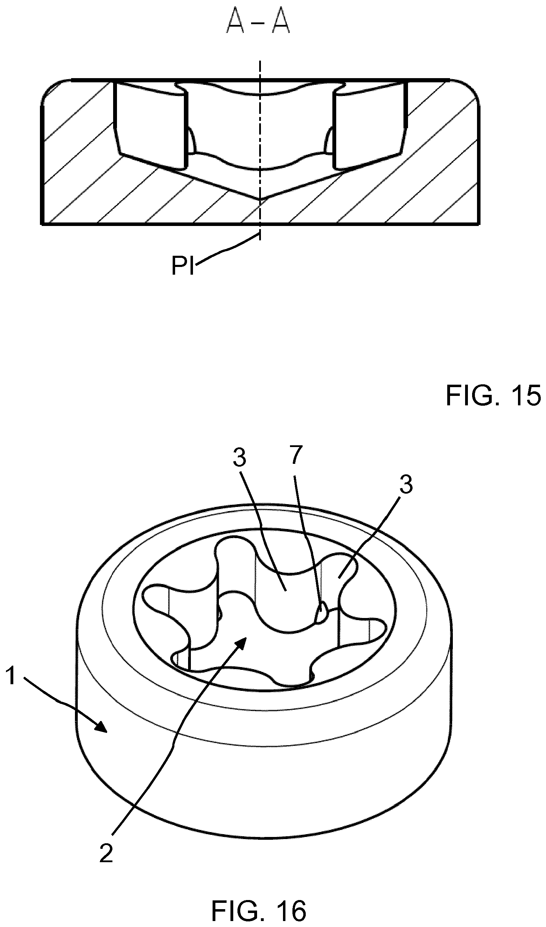

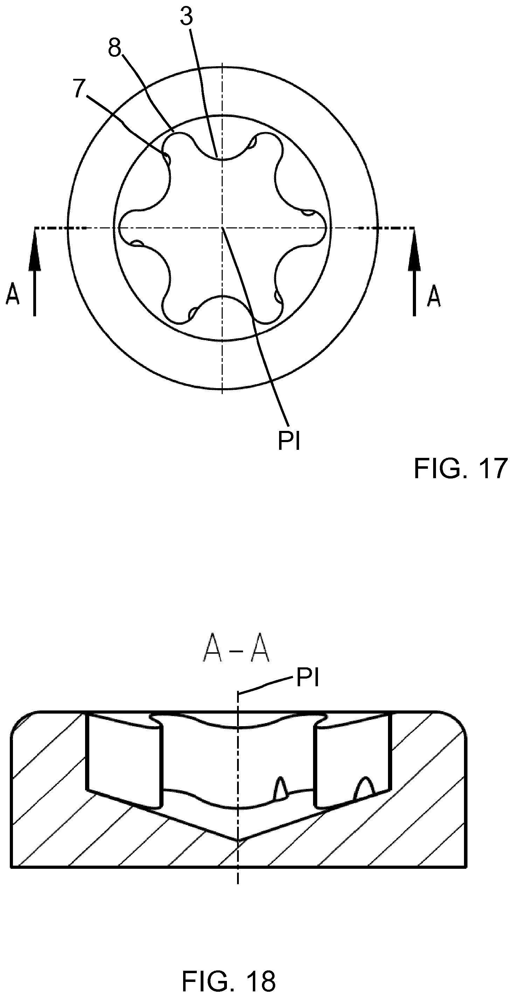

Wie in den Figuren 13 bis 18 dargestellt, können die Klemmnasen 7 auch in den Übergangsbereichen 8 vorgesehen sein. Bei der Ausgestaltung, welche in den Figuren 13 bis 15 gezeigt ist, ist es beispielsweise möglich, die Klemmnasen 7 jeweils am Scheitelpunkt der konvex gekrümmten Übergangsflächen 8 vorzusehen. Ebenso können die Klemmnasen am Übergang zwischen den Antriebsflächen 3 und den Übergangsflächen 8 ausgebildet sein, wie in den Figuren 16 bis 18 gezeigt ist.

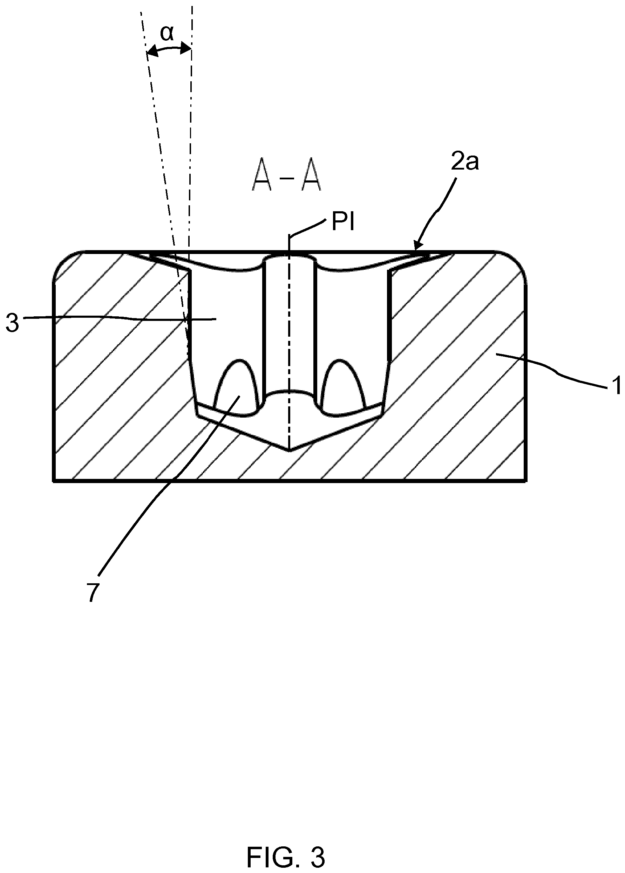

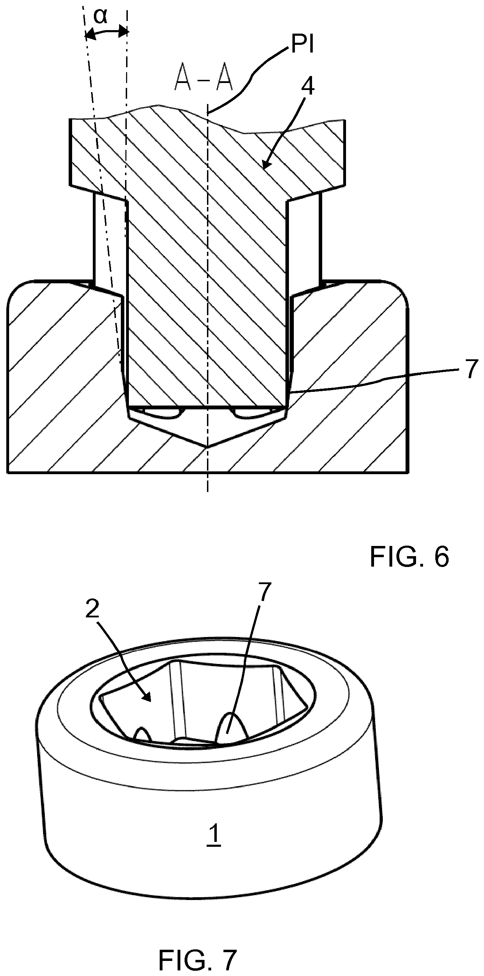

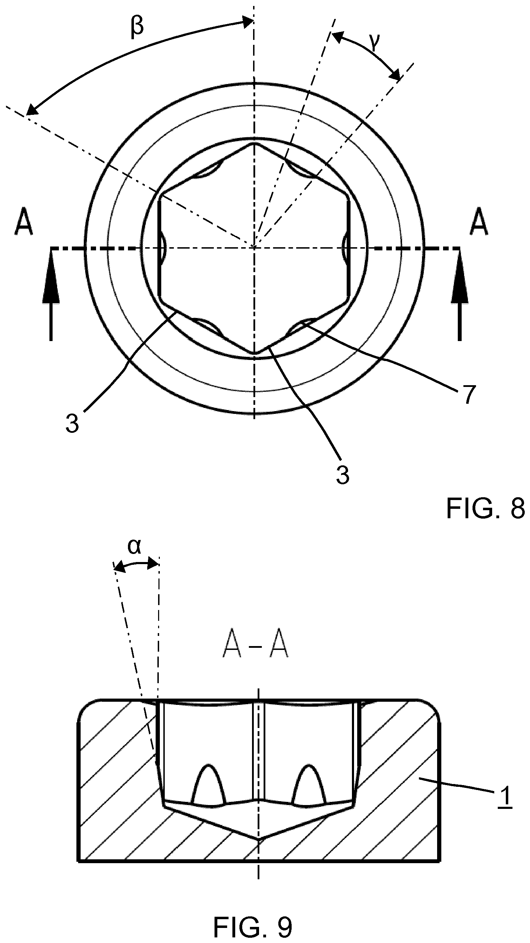

In den Figuren 7 bis 9 ist ein Antriebselement gemäß der vorliegenden Erfindung in Form einer Schraube dargestellt, von welcher nur der Schraubenkopf 1 gezeigt ist. Hier ist im Unterschied zu der in den Figuren 1 bis 6 dargestellten Ausführungsform das innere Mitnahmeprofil 2 des Schraubenkopfes nicht als Innensechsrund-Profil, sondern als Innensechskant-Profil mit sechs gleichmä-βig entlang des Umfangs um eine Profilachse PI verteilt angeordnete Antriebsfläche 3 ausgebildet. Wie bei dem in den Figuren 1 bis 3 dargestellten Schraubenkopf sind die Klemmnasen 7 mittig von den Antriebsflächen 3 positioniert und erstrecken sich vom unteren Ende der Antriebsflächen 3 nach oben hin. Hinsichtlich der konkreten Ausgestaltung der Klemmnasen gelten die obigen Ausführungen entsprechend.

### Bezugszeichenliste

- 1: Schraubenkopf
- 2: inneres Mitnahmeprofil
- 2a: Einstecköffnung
- 3: Antriebsflächen
- 4: Schaubenbit
- 5: äußeres Mitnahmeprofil
- 6: Antriebsflächen
- 7: Klemmnasen
- 8: Übergangsflächen

- PI: Profilachse
- PA: Profilachse
- S: Spalt

- α: Neigungswinkel der Klemmnasen
- β: Umfangswinkel der Antriebsflächen
- γ: Umfangswinkel der Klemmnasen

## Patentansprüche

1. Antriebselement, insbesondere in der Form einer Schraube, welches ein inneres Mitnahmeprofil (2) aufweist, das eine Profilachse (PI) definiert und an seiner Innenseite mehrere gleichmäßig um die Profilachse (PI) verteilt angeordnete Antriebsflächen (3) aufweist, wobei das innere Mitnahmeprofil (2) an seinem einen oberen Ende eine Einstecköffnung (2a) bildet, über welche das innere Mitnahmeprofil (2) mit einem äußeren Mitnahmeprofil (5) eines korrespondierenden Antriebselements zusammengesteckt werden kann, **dadurch gekennzeichnet, dass** an den Antriebsflächen (3) Klemmnasen (7) vorgesehen sind, welche sich ausgehend von dem unteren Ende der Antriebflächen (3) nach oben in Richtung der Einstecköffnung (2a) erstrecken, und dass die Klemmnasen (7) von der Profilachse (PI) in Richtung der jeweiligen Antriebsfläche (3) betrachtet eine umgekehrt paraboloide Außenkontur mit einem zur Einstecköffnung (2a) weisenden Scheitel sowie im Querschnitt senkrecht zur Profilachse (PI) eine paraboloide Querschnittskontur mit einem zum Inneren des inneren Mitnahmeprofils (2) weisenden Scheitel aufweisen, wobei die Querschnittsfläche der Klemmnasen (7) vom unteren zum oberen Ende der Klemmnasen (7) kontinuierlich abnimmt.

2. Antriebselement nach Anspruch 1, **dadurch gekennzeichnet, dass** die Klemmnasen (7) jeweils symmetrisch zu einer die Profilachse (PI) schneidenden Längsmittelebene (A-A) der jeweiligen Antriebsfläche (3) ausgebildet sind.

3. Antriebselement nach Anspruch 2, **dadurch gekennzeichnet, dass** in der Längsmittelebene (A-A) der jeweiligen Antriebsfläche (3) betrachtet die zur Profilachse (PI) weisenden Seiten zumindest über einen Teilabschnitt ihrer axialen Länge, bevorzugt über ihre gesamte axiale Länge geradlinig verlaufen und mit der Profilachse (PI) einen Neigungswinkel α von wenigstens 1°, insbesondere wenigstens 1,5°, bevorzugt wenigstens 2,5° und speziell bevorzugt wenigstens 4,5° und/oder maximal 10°, insbesondere maximal 9°, bevorzugt maximal 8° und speziell bevorzugt maximal 7° einschließen.

4. Antriebselement nach Anspruch 3, **dadurch gekennzeichnet, dass** der Neigungswinkel α in einem Bereich von 2 bis 5°, insbesondere 3 bis 4° liegt.

5. Antriebselement nach einem der vorherigen Ansprüche, **dadurch gekennzeichnet, dass** die Klemmnasen (7) sich ausgehend von dem unteren Ende der Antriebsflächen (3) über wenigstens 10%, insbesondere wenigstens 20%, bevorzugt wenigstens 30% und besonders bevorzugt über wenigstens 40% und/oder über maximal 100%, insbesondere maximal 80%, bevorzugt maximal 70%, bevorzugt maximal 60% und besonders bevorzugt maximal 50% der axialen Höhe der Antriebsflächen (3) erstrecken und/oder
dass an sämtlichen Antriebsflächen (3) Klemmnasen (7) ausgebildet sind und/oder
dass sämtliche Klemmnasen (7) identisch ausgebildet sind.

6. Antriebselement nach einem der vorherigen Ansprüche, wobei sich die Antriebsflächen (3) jeweils über einen vorgegebenen Umfangswinkel β um die Profilachse (PI) erstrecken, **dadurch gekennzeichnet, dass** sich die Klemmnasen (7) an ihrem unteren Ende über den gesamten Umfangswinkel β erstrecken.

7. Antriebselement nach einem der Ansprüche 1 bis 5, wobei sich die Antriebsflächen (3) über einen vorgegebenen Umfangswinkel β um die Profilachse (PI) erstrecken, **dadurch gekennzeichnet, dass** sich die Klemmnasen (9) über einen Umfangswinkel erstrecken, der wenigstens 10%, insbesondere wenigstens 20%, bevorzugt wenigstens 30% und/oder maximal 70%, insbesondere maximal 60% und bevorzugt maximal 50% des Umfangswinkels β beträgt.

8. Antriebselement nach einem der vorherigen Ansprüche, **dadurch gekennzeichnet, dass** das innere Mitnahmeprofil (2) als Innensechskant-Profil mit sechs gleichmäßig um die Profilachse (Pl) verteilt angeordneten ebenen Antriebsflächen (3) ausgebildet ist.

9. Antriebselement nach einem der Ansprüche 1 bis 7, **dadurch gekennzeichnet, dass** das innere Mitnahmeprofil (2) als Innenvielrund-Profil, insbesondere als Innensechsrund-Profil ausgebildet ist, wobei die Antriebsflächen (3) durch die konkav nach innen in Richtung der Profilachse (PI) verlaufenden Bereiche des Innenvielrund-Profils gebildet sind.

10. Antriebselement, insbesondere in der Form einer Schraube, welches ein inneres Mitnahmeprofil (2) aufweist, das als Innenvielrund-Profil, insbesondere als Innensechsrund-Profil ausgebildet ist, wobei das innere Mitnahmeprofil (2) eine Profilachse (PI) definiert und an seiner Innenseite mehrere gleichmäßig um die Profilachse (PI) verteilt angeordnete Antriebsflächen (3) aufweist, welche durch die konkav nach innen gerichteten Bereiche des Innenvielrund-Profils gebildet werden, und zwischen den Antriebsflächen (3) liegende Übergangsbereiche (8) besitzt, welche von der Proflachse (Pl) weg konvex nach außen gekrümmt sind, wobei das innere Mitnahmeprofil (2) an seinem einen oberen Ende eine Einstecköffnung (2a) bildet, über welche das innere Mitnahmeprofil (2) mit einem äußeren Mitnahmeprofil (5) eines korrespondierenden Antriebselements zusammengesteckt werden kann, **dadurch gekennzeichnet, dass** an den Übergangsflächen (8) Klemmnasen (7) vorgesehen sind, welche sich ausgehend von dem unteren Ende der Übergangsflächen (8) nach oben in Richtung der Einstecköffnung (2a) erstrecken, und dass die Klemmnasen (7) von der Profilachse (PI) in Richtung der jeweiligen Übergangsfläche (8) betrachtet eine umgekehrt paraboloide Außenkontur mit einem zur Einstecköffnung (2a) weisenden Scheitel aufweisen und im Querschnitt senkrecht zur Profilachse (PI) der Übergangsfläche (8) eine paraboloide Querschnittskontur mit einem zum Inneren des inneren Mitnahmeprofils (2) weisenden Scheitel aufweisen, wobei die Querschnittsfläche der Klemmnasen (7) vom unteren zum oberen Ende der Klemmnasen (7) kontinuierlich abnimmt.

11. Antriebselement nach Anspruch 10, **dadurch gekennzeichnet, dass** die Klemmnasen (7) jeweils symmetrisch zu einer die Profilachse (PI) schneidenden Längsmittelebene (A-A) der jeweiligen Übergangsfläche (8) ausgebildet sind.

12. Antriebselement nach Anspruch 11, **dadurch gekennzeichnet, dass** in der Längsmittelebene (A-A) der jeweiligen Übergangsfläche (8) betrachtet die zur Profilachse (PI) weisenden Seiten zumindest über einen Teilabschnitt ihrer axialen Länge, bevorzugt über ihre gesamte axiale Länge geradlinig verlaufen und mit der Profilachse (PI) einen Neigungswinkel α von wenigstens 1°, insbesondere wenigstens 1,5°, bevorzugt wenigstens 2,5° und speziell bevorzugt wenigstens 4,5° und/oder maximal 10°, insbesondere maximal 9°, bevorzugt maximal 8° und speziell bevorzugt maximal 7° einschließen.

13. Antriebselement nach Anspruch 12, **dadurch gekennzeichnet, dass** der Neigungswinkel α in einem Bereich von 2 bis 5°, insbesondere 3 bis 4° liegt.

14. Antriebselement nach einem der vorherigen Ansprüche, **dadurch gekennzeichnet, dass** die Klemmnasen (7) sich ausgehend von dem unteren Ende der Übergangsflächen (8) über wenigstens 10%, insbesondere wenigstens 20%, bevorzugt wenigstens 30% und besonders bevorzugt über wenigstens 40% und/oder über maximal 100%, insbesondere maximal 80%, bevorzugt maximal 70%, bevorzugt maximal 60% und besonders bevorzugt maximal 50% der axialen Höhe der Übergangsflächen (8) erstrecken und/oder
dass an sämtlichen Übergangsflächen (8) Klemmnasen (7) ausgebildet sind und/oder
dass sämtliche Klemmnasen (7) identisch ausgebildet sind.

15. Antriebselement nach einem der Ansprüche 10 bis 14, wobei sich die Übergangsflächen (8) über einen vorgegebenen Umfangswinkel um die Profilachse (PI) erstrecken, **dadurch gekennzeichnet, dass** sich die Klemmnasen (9) über einen Umfangswinkel erstrecken, der wenigstens 10%, insbesondere wenigstens 20%, bevorzugt wenigstens 30% und/oder maximal 70%, insbesondere maximal 60% und bevorzugt maximal 50% des Umfangswinkels beträgt.

## Claims

1. Drive element, in particular in the form of a screw, which has an inner driving profile (2) which defines a profile axis (PI) and has on its inner side a plurality of drive surfaces (3) arranged uniformly distributed around the profile axis (PI), wherein the inner driving profile (2) forms an insertion opening (2a) at its one upper end, via which the inner driving profile (2) can be plugged together with an outer driving profile (5) of a corresponding drive element, **characterized in that** clamping noses (7) are provided on the drive surfaces (3), which, starting from the lower end of the drive surfaces (3), extend upwards in the direction of the insertion opening (2a), and **in that**, viewed from the profile axis (PI) in the direction of the respective drive surface (3), the clamping noses (7) have an inverted paraboloid outer contour with an apex pointing towards the insertion opening (2a) and, in cross-section perpendicular to the profile axis (PI), a paraboloid cross-sectional contour with an apex pointing towards the interior of the inner driving profile (2), the cross-sectional area of the clamping noses (7) decreasing continuously from the lower to the upper end of the clamping noses (7).

2. Drive element according to claim 1, **characterized in that the** clamping noses (7) are each designed symmetrically to a longitudinal central plane (A-A) of the respective drive surface (3) intersecting the profile axis (PI).

3. Drive element according to claim 2, **characterized in that,** viewed in the longitudinal central plane (A-A) of the respective drive surface (3), the sides facing the profile axis (PI) extend at least over a section of their axial length, preferably over their entire axial length and include an angle of inclination α with the profile axis (PI) of at least 1°, in particular at least 1.5°, preferably at least 2.5° and particularly preferably at least 4.5° and/or of at most 10°, in particular at most 9°, preferably at most 8° and particularly preferably at most 7°.

4. Drive element according to claim 3, **characterized in that** the angle of inclination α is in a range of 2 to 5°, in particular 3 to 4°.

5. Drive element according to one of the preceding claims, **characterized in that,** starting from the lower end of the drive surfaces (3), the clamping noses (7) extend over at least 10%, in particular at least 20%, preferably at least 30% and particularly preferably over at least 40% and/or over a maximum of 100%, in particular a maximum of 80%, preferably a maximum of 70%, preferably a maximum of 60% and particularly preferably a maximum of 50% of the axial height of the drive surfaces (3) and/or
that clamping noses (7) are formed on all drive surfaces (3) and/or
that all clamping noses (7) are identically designed.

6. Drive element according to one of the previous claims, wherein the drive surfaces (3) each extend over a predetermined circumferential angle β around the profile axis (PI), **characterized in that** the clamping noses (7) extend at their lower end over the entire circumferential angle β.

7. Drive element according to one of claims 1 to 5, wherein the drive surfaces (3) extend over a predetermined circumferential angle β around the profile axis (PI), **characterized in that** the clamping noses (9) extend over a circumferential angle which is at least 10%, in particular at least 20%, preferably at least 30% and/or at most 70%, in particular at most 60% and preferably at most 50% of the circumferential angle β.

8. Drive element according to one of the preceding claims, **characterized in that** the inner drive profile (2) is designed as an internal hexagonal profile with six flat drive surfaces (3) arranged evenly distributed around the profile axis (PI).

9. Drive element according to one of claims 1 to 7, **characterized in that** the inner driving profile (2) is designed as an inner polygonal profile, in particular as an inner hexagonal profile, the driving surfaces (3) being formed by the regions of the inner polygonal profile running concavely inwards in the direction of the profile axis (PI).

10. Drive element, in particular in the form of a screw, which has an inner driving profile (2) which is designed as an inner polygonal profile, in particular as an inner hexagonal profile, the inner driving profile (2) defining a profile axis (PI) and having on its inner side a plurality of drive surfaces (3) which are arranged uniformly distributed around the profile axis (PI) and are formed by the concavely inwardly directed regions of the inner polygonal profile, and has transition regions (8) lying between the drive surfaces (3), which transition regions are curved convexly outwards away from the profile axis (PI), the inner driving profile (2) forming an insertion opening (2a) at its one upper end, via which the inner driving profile (2) can be plugged together with an outer driving profile (5) of a corresponding drive element, **characterized in that** clamping noses (7) are provided on the transition surfaces (8) and extend from the lower end of the transition surfaces (8) upwards in the direction of the insertion opening (2a), and **in that** the clamping noses (7), viewed from the profile axis (PI) in the direction of the respective transition surface (8), have an inverted paraboloid outer contour with an apex pointing towards the insertion opening (2a) and, in cross-section perpendicular to the profile axis (PI) of the transition surface (8), have a paraboloid cross-sectional contour with an apex pointing towards the interior of the inner driving profile (2), wherein the cross-sectional area of the clamping noses (7) decreases continuously from the lower to the upper end of the clamping noses (7).

11. Drive element according to claim 10, **characterized in that** the clamping noses (7) are each formed symmetrically with respect to a longitudinal central plane (A-A) of the respective transition surface (8) intersecting the profile axis (PI).

12. Drive element according to claim 11, **characterized in that,** viewed in the longitudinal central plane (A-A) of the respective transition surface (8), the sides facing the profile axis (PI) extend at least over a section of their axial length, preferably over their entire axial length, run in a straight line and enclose an angle of inclination α of at least 1°, in particular at least 1.5°, preferably at least 2.5° and especially preferably at least 4.5° and/or of at most 10°, in particular at most 9°, preferably at most 8° and especially preferably at most 7° with the profile axis (PI).

13. Drive element according to claim 12, **characterized in that** the angle of inclination α is in a range from 2 to 5°, in particular 3 to 4°.

14. Drive element according to one of the preceding claims, **characterized in that,** starting from the lower end of the transition surfaces (8), the clamping noses (7) extend over at least 10%, in particular at least 20%, preferably at least 30% and particularly preferably over at least 40% and/or over a maximum of 100%, in particular a maximum of 80%, preferably a maximum of 70%, preferably a maximum of 60% and particularly preferably a maximum of 50% of the axial height of the transition surfaces (8) and/or
that clamping noses (7) are formed on all transition surfaces (8) and/or that all clamping noses (7) are identically designed.

15. Drive element according to one of claims 10 to 14, wherein the transition surfaces (8) extend over a predetermined circumferential angle about the profile axis (PI), **characterized in that** the clamping noses (9) extend over a circumferential angle which is at least 10%, in particular at least 20%, preferably at least 30% and/or at most 70%, in particular at most 60% and preferably at most 50% of the circumferential angle.

## Revendications

1. Elément d'entraînement, en particulier sous la forme d'une vis, qui présente un profil d'entraînement intérieur (2) qui définit un axe de profil (PI) et qui présente sur sa face intérieure plusieurs surfaces d'entraînement (3) réparties régulièrement autour de l'axe de profil (PI), le profilé d'entraînement intérieur (2) formant à l'une de ses extrémités supérieures une ouverture d'en-fichage (2a) par laquelle le profilé d'entraînement intérieur (2) peut être enfiché avec un profilé d'entraînement extérieur (5) d'un élément d'entraînement correspondant, **caractérisé en ce que** des ergots de serrage (7) sont prévus sur les surfaces d'entraînement (3), qui, partant de l'extrémité inférieure des surfaces d'entraînement (3), s'étendent vers le haut en direction de l'ouverture d'enfichage (2a), et **en ce que** les ergots de serrage (7), vus depuis l'axe du profil (PI) en direction de la surface d'entraînement (3) respective, présentent un contour extérieur paraboloïde inversé avec un sommet dirigé vers l'ouverture d'insertion (2a) ainsi que, en section transversale perpendiculaire à l'axe du profil (PI), un contour de section transversale paraboloïde avec un sommet dirigé vers l'intérieur du profil d'entraînement intérieur (2), la surface de section transversale des ergots de serrage (7) diminuant continuellement de l'extrémité inférieure à l'extrémité supérieure des ergots de serrage (7).

2. Elément d'entra nement selon la revendication 1, **caractérisé en ce que** les ergots de serrage (7) sont réalisés chacun symétriquement par rapport à un plan médian longitudinal (A-A) de la surface d'entraînement (3) respective coupant l'axe du profilé (PI).

3. Elément d'entraînement selon la revendication 2, **caractérisé en ce que,** vu dans le plan médian longitudinal (A-A) de la surface d'entraînement (3) respective, les côtés orientés vers l'axe de profil (PI) sont parallèles au moins sur une section partielle de leur longueur axiale, de préférence sur toute leur longueur axiale s'étendent en ligne droite et forment avec l'axe du profil (PI) un angle d'inclinaison α d'au moins 1°, en particulier d'au moins 1,5°, de préférence d'au moins 2,5° et de manière spécialement préférée d'au moins 4,5° et/ou de 10° au maximum, en particulier de 9° au maximum, de préférence de 8° au maximum et de manière spécialement préférée de 7° au maximum.

4. Élément d'entraînement selon la revendication 3, **caractérisé en ce que** l'angle d'inclinaison α est compris dans une plage de 2 à 5°, en particulier de 3 à 4°.

5. Elément d'entraînement selon l'une des revendications précédentes, **caractérisé en ce que** les ergots de serrage (7) s'étendent, en partant de l'extrémité inférieure des surfaces d'entraînement (3), sur au moins 10%, en particulier au moins 20%, de préférence au moins 30% et de manière particulièrement préférée sur au moins 40% et/ou sur au maximum 100%, en particulier au maximum 80%, de préférence au maximum 70%, de préférence au maximum 60% et de manière particulièrement préférée au maximum 50% de la hauteur axiale des surfaces d'entraînement (3) et/ou
**en ce que** des ergots de serrage (7) sont formés sur toutes les surfaces d'entraînement (3) et/ou
**en ce que** tous les ergots de serrage (7) sont réalisés de manière identique.

6. Élément d'entraînement selon l'une quelconque des revendications précédentes, dans lequel les surfaces d'entraînement (3) s'étendent chacune sur un angle circonférentiel prédéterminé β autour de l'axe du profil (PI), **caractérisé en ce que** les ergots de serrage (7) s'étendent à leur extrémité inférieure sur tout l'angle circonférentiel β.

7. Élément d'entraînement selon l'une quelconque des revendications 1 à 5, dans lequel les surfaces d'entraînement (3) s'étendent sur un angle circonférentiel prédéterminé β autour de l'axe de profil (PI), **caractérisé en ce que** les taquets de serrage (9) s'étendent sur un angle circonférentiel qui est d'au moins 10%, notamment d'au moins 20%, de préférence d'au moins 30% et/ou d'au plus 70%, notamment d'au plus 60% et de préférence d'au plus 50% de l'angle circonférentiel β.

8. Élément d'entraînement selon l'une des revendications précédentes, **caractérisé en ce que** le profilé d'entraînement intérieur (2) est réalisé sous la forme d'un profilé à six pans creux avec six surfaces d'entraînement planes (3) réparties uniformément autour de l'axe du profilé (PI).

9. Élément d'entraînement selon l'une des revendications 1 à 7, **caractérisé en ce que** le profilé d'entraînement intérieur (2) est réalisé sous la forme d'un profilé polygonal intérieur, notamment d'un profilé hexagonal intérieur, les surfaces d'entraînement (3) étant formées par les zones du profilé polygonal intérieur s'étendant de manière concave vers l'intérieur en direction de l'axe (PI) du profilé.

10. Elément d'entraînement, en particulier sous la forme d'une vis, qui présente un profil d'entraînement intérieur (2) qui est réalisé sous la forme d'un profil polygonal intérieur, en particulier d'un profil hexagonal intérieur, le profil d'entraînement intérieur (2) définissant un axe de profil (PI) et présentant sur sa face intérieure plusieurs surfaces d'entraînement (3) réparties régulièrement autour de l'axe de profil (PI), qui sont formées par les zones du profil polygonal intérieur orientées de manière concave vers l'intérieur, et possède des zones de transition (8) situées entre les surfaces d'entraînement (3), qui sont courbées de manière convexe vers l'extérieur en s'éloignant de l'axe du profil (PI), le profil d'entraînement intérieur (2) formant à l'une de ses extrémités supérieures une ouverture d'enfichage (2a), par laquelle le profil d'entraînement intérieur (2) peut être enfiché avec un profil d'entraînement extérieur (5) d'un élément d'entraînement correspondant, **caractérisé en ce que** des ergots de serrage (7) sont prévus sur les surfaces de transition (8), lesquels s'étendent vers le haut en direction de l'ouverture d'insertion (2a) en partant de l'extrémité inférieure des surfaces de transition (8), et **en ce que** les ergots de serrage (7), vus depuis l'axe (PI) du profil en direction de la surface de transition (8) respective, présentent un contour extérieur paraboloïde inversé avec un sommet se terminant en direction de l'ouverture d'insertion (2a) et, en section transversale perpendiculaire à l'axe (PI) du profil de la surface de transition (8), présentent un contour de section transversale paraboloïde avec un sommet orienté vers l'intérieur du profil d'entraînement intérieur (2), la surface de la section transversale des ergots de serrage (7) diminuant de manière continue de l'extrémité inférieure à l'extrémité supérieure des ergots de serrage (7).

11. Elément d'entraînement selon la revendication 10, **caractérisé en ce que** les taquets de serrage (7) sont respectivement réalisés de manière symétrique par rapport à un plan médian longitudinal (A-A) de la surface de transition respective (8) coupant l'axe du profilé (PI).

12. Élément d'entraînement selon la revendication 11, **caractérisé en ce que**, vu dans le plan médian longitudinal (A-A) de la surface de transition respective (8), les côtés orientés vers l'axe de profil (PI) sont parallèles au moins sur une section partielle de leur longueur axiale, de préférence sur toute leur longueur axiale, sont rectilignes et forment avec l'axe du profil (PI) un angle d'inclinaison α d'au moins 1°, en particulier d'au moins 1,5°, de préférence d'au moins 2,5° et de manière particulièrement préférée d'au moins 4,5° et/ou de 10° au maximum, en particulier de 9° au maximum, de préférence de 8° au maximum et de manière particulièrement préférée de 7° au maximum.

13. Élément d'entraînement selon la revendication 12, **caractérisé en ce que** l'angle d'inclinaison α est compris dans une plage de 2 à 5°, en particulier de 3 à 4°.

14. Elément d'entraînement selon l'une des revendications précédentes, **caractérisé en ce que** les taquets de serrage (7) s'étendent, en partant de l'extrémité inférieure des surfaces de transition (8), sur au moins 10%, en particulier au moins 20%, de préférence au moins 30% et de manière particulièrement préférée sur au moins 40% et/ou sur au maximum 100%, en particulier au maximum 80%, de préférence au maximum 70%, de préférence au maximum 60% et de manière particulièrement préférée au maximum 50% de la hauteur axiale des surfaces de transition (8) et/ou
**en ce que** des ergots de serrage (7) sont formés sur toutes les surfaces de transition (8) et/ou
**en ce que** tous les ergots de serrage (7) sont réalisés de manière identique.

15. Elément d'entraînement selon l'une des revendications 10 à 14, dans lequel les surfaces de transition (8) s'étendent sur un angle circonférentiel prédéterminé autour de l'axe de profil (PI), **caractérisé en ce que** les ergots de serrage (9) s'étendent sur un angle circonférentiel qui est d'au moins 10%, en particulier d'au moins 20%, de préférence d'au moins 30% et/ou d'au maximum 70%, en particulier d'au maximum 60% et de préférence d'au maximum 50% de l'angle circonférentiel.
